# EUROPEAN PATENT APPLICATION

(11) **EP 4 711 306 A1**
(43) Date of publication of application: **18.03.2026**
(21) Application number: 25789156.4
(22) Date of filing: 03.01.2025
(51) Int. Cl.: B65G 1/04, B07C 3/06

(54) **WAREHOUSE SYSTEM, RETRIEVAL METHOD AND STORAGE METHOD**

(30) Priority: 25.10.2024 CN 202422596593 U
(71) Applicant: Hangzhou Hikrobot Co., Ltd., Hangzhou, Zhejiang 310051 (CN)
(72) Inventor: HE, Chaoqun, Hangzhou, Zhejiang 310051 (CN); SU, Quan, Hangzhou, Zhejiang 310051 (CN)
(74) Representative: Yang, Shu
(86) International application number: PCT/CN2025/070484
(87) International publication number: WO 2025/218281

(57) **Abstract**

Provided in the embodiments of the present application are a warehouse system, a retrieval method and a storage method. The warehouse system comprises a storage area, rack-hung robots, goods conveyor lines and a picking area, wherein the storage area comprise a plurality of warehouse racks arranged at intervals; an aisle extending in the direction of length of the warehouse racks is formed between adjacent warehouse racks; a first end of each goods conveyor line extends into the corresponding warehouse rack in the storage area, and a second end of each goods conveyor line extends to the picking area, and is used for conveying goods between the storage area and the picking area; and each rack-hung robot is hung on the side of the warehouse rack close to the aisle, and is configured to move along the aisle to pick and place goods between the warehouse rack and the goods conveyor line inside the warehouse rack. Goods storage and retrieval are realized by means of labor division and cooperation between the rack-hung robots and the goods conveyor lines, and the mobile goods picking and placing of the rack-hung robots and the conveying of the goods conveyor lines can be performed simultaneously, and do not interfere with each other, thereby improving the goods pick-and-place efficiency and the handling efficiency of the warehouse system.

## Description

The present application claims priority to Chinese patent application 202422596593.4 filed with the China National Intellectual Property Administration (CNIPA) on October 25, 2024 and entitled "warehouse system", which is incorporated herein by reference in its entirety.

### Technical Field

The present application relates to the field of logistics warehouse technology, and in particular to a warehouse system, a warehousing-out method and a warehousing-in method.

### Background

In the related art, a warehouse system includes multiple goods shelves and handling devices. A handling device usually adopts a handling robot or a stacker. The handling device needs both to pick up and place goods at a goods shelf and a picking area, and to carry and guide goods between the goods shelves and the picking area, so that the handling device experiences a long travel distance. When multiple handling devices are schedule by the warehouse system, a path planning is complicated, resulting in low efficiency in picking-up and placing goods in the warehouse system.

### Summary

The purpose of the embodiments of the present application is to provide a warehouse system, a warehousing-out method and a warehousing-in method to improve an efficiency of picking-up and placing goods. The specific technical solutions are as follows:
An embodiment of the present application provides a warehouse system, including a storage area, sky transfer units, goods conveying lines and a picking area; wherein the storage area includes multiple spaced goods shelves, and a laneway extending along a length direction of the goods shelves is formed between adjacent goods shelves; one of the goods conveying lines has a first end extending to an inside of the goods shelf of the storage area and a second end extending to the picking area, and is used to convey goods between the storage area and the picking area; one of the sky transfer units is hung on a side of the goods shelf close to the laneway and is used to move along the laneway and pick up and place the goods between a goods shelf and the goods conveying line inside the goods shelf.

In some embodiments of the present application, the warehouse system further includes a control device; the control device is in communication connection with the sky transfer unit and the goods conveying line, and is used to control the sky transfer unit to pick up and place the goods between the goods shelf and the goods conveying line inside the goods shelf, and to control the goods conveying line to convey the goods between the storage area and the picking area.

An embodiment of the present application further provides a warehousing-out method, which is applied to a control device in the warehouse system, and the method includes: sending an instruction to a sky transfer unit, making the sky transfer unit carry and guide target to-be-warehoused-out goods from a goods shelf to a goods conveying line inside the goods shelf; and sending an instruction to the goods conveying line, making the goods conveying line convey the target to-be-warehoused-out goods from a storage area to a picking area.

An embodiment of the present application further provides a warehousing-in method, which is applied to a control device in the warehouse system, and the method includes: sending an instruction to a goods conveying line, making the goods conveying line convey target to-be-warehoused-in goods from a picking area to a storage area; and sending an instruction to a sky transfer unit, making the sky transfer unit carry and guide the target to-be-warehoused-in goods from the goods conveying line inside a goods shelf to the goods shelf.

In the warehouse system provided by the embodiment of the present application, the goods conveying line has a first end extending to an inside of the goods shelf in the storage area and a second end extending to the picking area, which is used to convey goods between the storage area and the picking area. The sky transfer unit is hung on the side of the goods shelf close to the laneway, and can move along the laneway to pick up and place the goods between the goods shelf and the goods conveying line inside the goods shelf. The goods are warehoused-in and warehoused-out through cooperation between the sky transfer unit and the goods conveying line, and a movement of the sky transfer unit to pick up and place the goods and a transmission of the goods conveying line can be carried out simultaneously without interfering with each other, thereby improving the efficiency of picking-up and placing goods and the moving efficiency of the warehouse system.

Of course, it is not necessary to achieve all the advantages described above at the same time to implement any product or method of this application.

### Brief Description of the Drawings

The accompanying drawings described here are used to provide a further understanding of the present application and constitute a part of the same. The illustrative embodiments of the present application and their descriptions are used to explain the present application and do not constitute an improper limitation of the present application.
Fig. 1 is a stereoscopic structure diagram of a warehouse system according to an embodiment of the present application;
Fig. 2 is a stereoscopic structure diagram of the warehouse system shown in Fig. 1 from another view;
Fig. 3 is a partial stereoscopic structure diagram of the warehouse system shown in Fig. 1;
Fig. 4a is a schematic diagram of a first distribution mode of a warehouse-out conveying line and a warehouse-in conveying line shown in Fig. 1;
Fig. 4b is a schematic diagram of a second distribution mode of a warehouse-out conveying line and a warehouse-in conveying line shown in Fig. 1;
Fig. 5 is a partial stereoscopic structure diagram of a distribution conveying line of the warehouse system shown in Fig. 1;
Fig. 6 is a schematic diagram of a stereoscopic structure of a sky transfer unit in Fig. 1;
Fig. 7 is a flowchart of a first embodiment of a warehousing-out method provided by the present application;
Fig. 8 is a flowchart of a second embodiment of the warehousing-out method provided by the present application;
Fig. 9 is a flowchart of a first embodiment of a warehousing-in method provided by the present application;
Fig. 10 is a flow chart of a second embodiment of a warehousing-in method provided by the present application.

### Reference Signs:

storage area 100; goods shelf 110; first goods shelf 110A; second goods shelf 110B; storage space 111; storage layer 1111; storage bin 1112; docking space 112; horizontal track 120;
sky transfer unit 200; support frame 210; column 211; goods picking-up and placing component 220; goods platform 221; hook mechanism 222; lifting component 230; lifting motor 231; transmission mechanism 232; conveyor belt 2321; transmission wheel 2322; driving wheel group 240;
goods conveying line 300; warehouse-out conveying line 310; warehouse-in conveying line 320; distribution conveying line 330; first distribution conveying line 331; second distribution conveying line 332; first lifting and load-shifting mechanism 333A; second lifting and load-shifting mechanism 333B; conveyor belt wheel 3331; second conveyor belt 3331A; conveyor wheel 3331B; lifting mechanism 3332; roller 334; first scanning device 341; second scanning device 342; third scanning device 343;
picking area 400; picking table 410; first picking transmission line 411; second picking transmission line 412; third picking transmission line 413; display 420;
laneway 500; goods 600.

### Detailed Description

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

As mentioned in the background, in the related art, a warehouse system includes multiple goods shelves and handling devices. A handling device usually adopts a handling robot or a stacker. The handling device needs both to pick up and place goods at a goods shelf and a picking area, and to carry and guide goods between the goods shelves and the picking area, resulting in low efficiency in picking-up and placing goods in the warehouse system.

In order to improve the efficiency of picking-up and placing goods, the embodiment of the present application provides a warehouse system, a warehousing-out method and a warehousing-in method. Below, the warehouse system provided by the embodiment of the present application is described in detail.

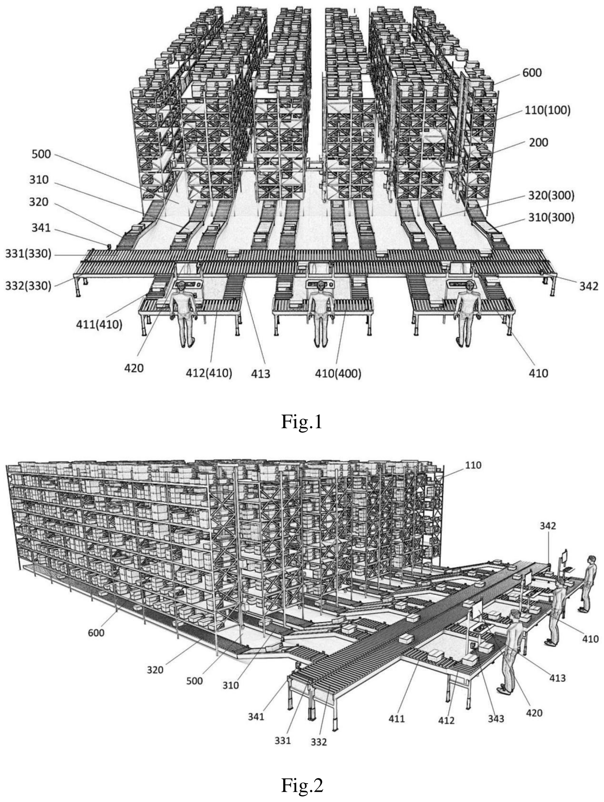

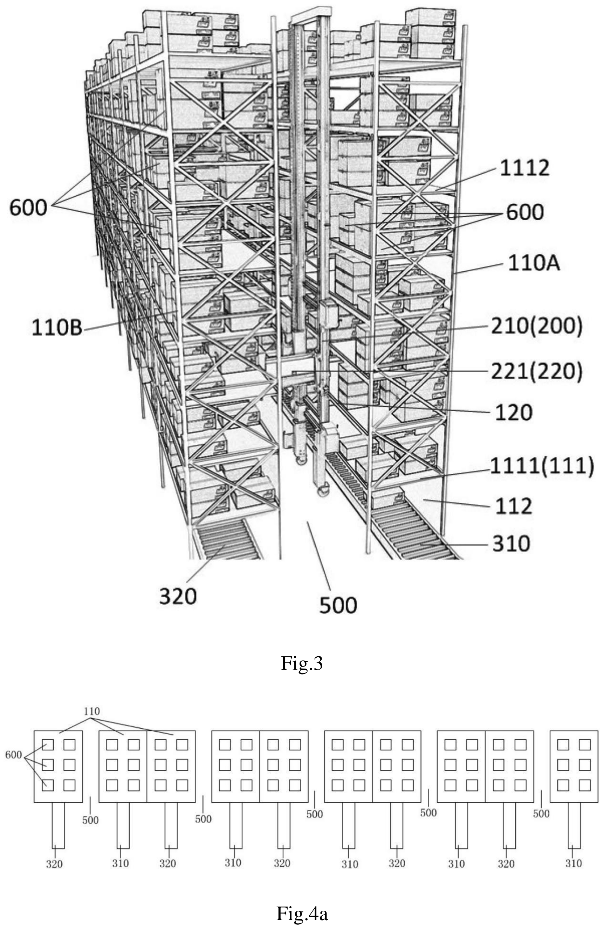

Referring to Figs. 1 to 3, Fig. 1 is a stereoscopic structure diagram of a warehouse system according to an embodiment of the present application; Fig. 2 is a stereoscopic structure diagram of the warehouse system shown in Fig. 1 from another view; and Fig. 3 is a partial stereoscopic structure diagram of the warehouse system shown in Fig. 1.

As shown in Figs. 1 to 3, the warehouse system includes: a storage area 100, sky transfer units 200, goods conveying lines 300 and a picking area 400.

The storage area 100 includes multiple spaced goods shelves 110, and a laneway 500 extending along a length direction of the goods shelves 110 is formed between adjacent goods shelves 110.

The goods conveying line 300 has a first end extending to an inside of a goods shelf 110 of the storage area 100 and a second end extending to the picking area 400, and is used to convey goods 600 between the storage area 100 and the picking area 400.

The sky transfer unit 200 is hung on one side of a goods shelf 110 close to a laneway 500 and is used to move along the laneway 500 and pick up and place goods 600 between the goods shelf 110 and a goods conveying line 300 inside the goods shelf 110.

Wherein the picking area 400 is used to pick up goods or place goods based on the goods conveying line 300.

In the warehouse system provided by the embodiment of the present application, the goods conveying line 300 has the first end extending to the inside of the goods shelf 110 of the storage area 100 and the second end extending to the picking area 400, and is used to convey goods 600 between the storage area 100 and the picking area 400; the sky transfer unit 200 is hung on one side of the goods shelf 110 close to the laneway 500 and can move along the laneway 500 and pick up and place the goods 600 between the goods shelf 110 and the goods conveying line 300 inside the goods shelf 110. The goods 600 are warehoused-in and warehoused-out through cooperation of the sky transfer unit 200 and the goods conveying line 300, and a movement of the sky transfer unit 200 to pick up and place the goods 600 and a transmission of the goods conveying line 300 can be carried out simultaneously without interfering with each other, thereby improving the efficiency of picking-up and placing goods and the carrying and guiding efficiency of the warehouse system.

Specifically, as shown in Figs. 1 to 3, the first end of the goods conveying line 300 extends to the inside of the goods shelf 110 of the storage area 100, and the first end may be located in a middle of the goods shelf 110 or at a bottom of the goods shelf 110. The goods 600 may be a specific article, or a material box or other container for holding articles, and the present application does not limit the type of the goods. Wherein, the goods 600 may have a variety of sizes. Taking the material box as an example, the goods 600 may be material boxes of different sizes for loading different articles.

In some embodiments of the present application, the sky transfer unit 200 is hung on a goods shelf 110 on one side of the laneway 500; the sky transfer unit 200 is used to pick up and place goods 600 on goods shelves 110 on both sides of the laneway 500, as well as goods 600 on the goods conveying lines 300 inside the goods shelves 110 on both sides of the laneway 500.

Further, in other embodiments, one sky transfer unit 200 may be hung on the goods shelf 110 on each of two sides of the laneway 500. A sky transfer unit 200 is used to pick up and place the goods 600 on the corresponding goods shelf 110, as well as the goods 600 on the goods conveying line 300 inside this corresponding goods shelf 110.

One or multiple sky transfer units 200 can be hung for each laneway 500 according to the length of the goods shelf 110. A respective one of the multiple sky transfer units 200 may be responsible for picking up and placing the goods 600 on a section of the goods shelf 110, so as to improve the efficiency of picking-up and placing the goods.

By applying the embodiment of the present application, the sky transfer unit 200 is hung on a goods shelf 110 on one side of the laneway 500, and picks up and places the goods 600 on the goods shelves 110 on both sides of the laneway 500, as well as the goods 600 on the goods conveying lines 300 inside the goods shelves 110 on both sides of the laneway 500, which can improve the utilization rate of the sky transfer unit 200 can be improved.

The storage area 100, the goods conveying line 300 and the picking area 400 of the warehouse system of the embodiment of the present application are first described in detail below.

Referring to Fig. 1, a storage area 100 of the warehouse system in the embodiment of the present application is provided with 6 rows of goods shelves 110, wherein the goods shelves 110 in four middle rows are four deep goods shelves which can be composed of two double deep goods shelves spliced back to back, and the goods shelves 110 at two sides are double deep goods shelves. As shown in Fig. 1, a laneway 500 is formed between adjacent rows of the goods shelves 110, and a sky transfer unit 200 is hung on one of the goods shelves 110 on both sides of the laneway 500, and is used to pick up and place double deep goods 600 being close to the laneway 500 on the goods shelves 110 on both sides of the laneway 500. Specifically, for the sake of neatness and ease of management, in this embodiment, the sky transfer unit 200 is hung on the goods shelf on the right side of the laneway.

In some embodiments of the present application, as shown in Figs. 1 to 3, the goods shelf 110 includes an upper storage space 111 and a bottom docking space 112.

The storage space 111 includes multiple storage layers 1111 spaced in a vertical direction for storing the goods 600; the docking space 112 is located below the storage space 111, the first end of the goods conveying line 300 extends to the docking space 112, and the second end of the goods conveying line 300 extends to the picking area 400.

Specifically, the storage layer 1111 is divided into multiple storage bins 1112 for storing the goods 600.

In some embodiments of the present application, as shown in Figs. 1 to 3, the goods conveying line 300 includes a warehouse-out conveying line 310 and a warehouse-in conveying line 320. The warehouse-out conveying line 310 and the warehouse-in conveying line 320 are arranged at a bottom of the goods shelf 110 of the storage area 100, and one side of each laneway 500 is the warehouse-out conveying line 310 and the other side is the warehouse-in conveying line 320.

First ends of the warehouse-out conveying line 310 and of the warehouse-in conveying line 320 extend in a parallel way to the bottom of the goods shelf 110; and second ends of the warehouse-out conveying line 310 and of the warehouse-in conveying line 320 extend to the picking area 400 respectively.

The warehouse-out conveying line 310 is used to output the to-be-warehoused-out goods 600, which are taken out from the goods shelf 110 by the sky transfer unit 200 and placed on the warehouse-out conveying line 310, to the picking area 400.

The warehouse-in conveying line 320 is used to input the to-be-warehoused-in goods 600, which are received from the picking area 400 to the bottom of the goods shelf 110, so that the sky transfer unit 200 moves the to-be-warehoused-in goods 600 on the warehouse-in conveying line 320 onto the goods shelf 110.

Specifically, the warehouse-out conveying line 310 and the warehouse-in conveying line 320 are unidirectional conveying lines. A conveying direction of the warehouse-out conveying line 310 is from the storage area 100 to the picking area 400, and a conveying direction of the warehouse-in conveying line 320 is from the picking area 400 to the storage area 100.

The goods shelf 110 is a multi-depth goods shelf, so that the docking space 112 can accommodate the warehouse-out conveying line 310 and the warehouse-in conveying line 320. Accordingly, the sky transfer unit 200 can pick up and place multi-depth goods 600.

However, in order to improve the utilization rate of the sky transfer unit 200, each of the goods shelves 110 located on both sides of the storage area 100 can be set with a deep that can only accommodate one warehouse-out conveying line 310 or one warehouse-in conveying line 320. The sky transfer unit 200 is arranged on one side of the goods shelf 110 close to the laneway 500, and can pick up and place the goods 600 on this goods shelf 110 and also the goods 600 on an adjacent goods shelf 110 thereto. There is no need to arrange a sky transfer unit 200 on the side of the goods shelf 110 away from the laneway 500.

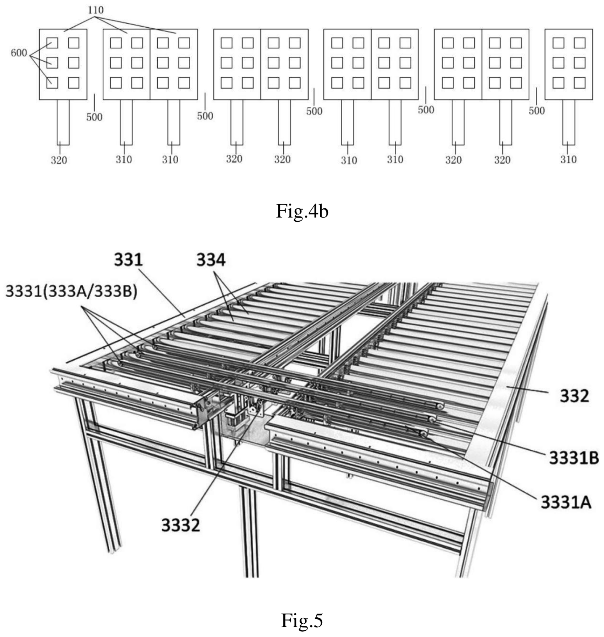

Referring to Figs. 4a and 4b, Fig. 4a is a schematic diagram of a first distribution mode of the warehouse-out conveying line and a warehouse-in conveying line shown in Fig.1; Fig.4b is a schematic diagram of a second distribution mode of a warehouse-out conveying line and a warehouse-in conveying line shown in Fig.1.

The warehouse-out conveying line 310 and the warehouse-in conveying line 320 can be arranged in sequence at the bottom of the goods shelf 110 of the storage area 100 as shown in Fig. 4a, that is, they can be arranged at the bottom of the goods shelf 110 of the storage area 100 in such an alternating order as the warehouse-out conveying line 310, the warehouse-in conveying line 320, the warehouse-out conveying line 310, and the warehouse-in conveying line 320.

The warehouse-out conveying line 310 and the warehouse-in conveying line 320 can also be as shown in Fig. 4b. In the storage area 100, two identical warehouse-out conveying lines 310 or two identical warehouse-in conveying lines 320 are arranged at a bottom of a four deep goods shelf, and types of goods conveying lines 300 at the bottoms of adjacent four deep goods shelves are different, and types of goods conveying lines 300 at the bottoms of double deep goods shelves on both sides of the storage area 100 are also different from the types of the goods conveying lines 300 at the bottoms of adjacent four deep goods shelves to respective double deep goods shelves.

Regardless of whether the first or second mode is adopted, it can be achieved that one side of each laneway 500 is a warehouse-out conveying line 310, and the other side is a warehouse-in conveying line 320. The present application will subsequently describe the warehouse system using the first mode as an example.

As shown in Fig. 1, the warehouse-out conveying line 310 and the warehouse-in conveying line 320 in the embodiment of the present application are arranged in parallel respectively on the left and the right at the bottom of each of four middle rows of four deep goods shelves in the storage area 100. The warehouse-in conveying line 320 is arranged at a bottom of a double deep goods shelf on a left side of the storage area 100, and the warehouse-in conveying line 320 is arranged at a bottom of a double deep goods shelf on a right side of the storage area 100.

When goods 600 on the four middle rows of four deep goods shelves in the storage area 100 need to be warehoused-out, the sky transfer unit 200 located in the laneway 500 on the side where the current goods 600 are located needs to pick up the goods and place them on the only warehouse-out conveying line 310 adjacent to this laneway 500.

When the goods 600 on the double deep goods shelf on the left side of the storage area 100 need to be warehoused-out, the sky transfer unit 200 in the laneway 500 can place the to-be-warehoused-out goods 600 on this goods shelf 110 on the warehouse-out conveying line 310 at the bottom of the adjacent goods shelf 110 of this goods shelf 110.

When the to-be-warehoused-in goods 600 need to be warehoused-in the double deep goods shelf on the right side of the storage area 100, the to-be-warehoused-in goods 600 can be conveyed to the docking space 112 of the adjacent goods shelf through the warehouse-in conveying line 320 at the bottom of the adjacent goods shelf 110 of this goods shelf 110, and then taken down by the sky transfer unit 200 in the laneway 500 and placed on this goods shelf 110.

Next, taking Fig. 3 as an example, working steps of the sky transfer unit 200 are described:
Two adjacent goods shelves 110 are shown in Fig. 3, with one being a first goods shelf 110A, and the other being a second goods shelf 110B.

A warehouse-out conveying line 310 is arranged at a bottom of the first goods shelf 110A near the laneway 500, and a warehouse-in conveying line 320 is arranged at a bottom of the second goods shelf 110B near the laneway 500. The sky transfer unit 200 is hung on the first goods shelf 110A. The sky transfer unit 200 includes a support frame 210 and a goods picking-up and placing component 220. The specific structure is described in detail in the subsequent description.

During warehousing-out:
A. The goods picking-up and placing component 220 moves horizontally and goes up and down based on the support frame 210, moves to a position corresponding to target to-be-warehoused-out goods 600 on the first goods shelf 110A or the second goods shelf 110B, and extends toward the target to-be-warehoused-out goods 600 for picking-up;
B. After picking up the goods, the goods picking-up and placing component 220 retracts and moves downward to a position corresponding to the warehouse-out conveying line 310 at the bottom of the first goods shelf 110A, extends toward the warehouse-out conveying line 310, and places the to-be-warehoused-out goods 600 on the warehouse-out conveying line 310.

During warehousing-in:
C. The goods picking-up and placing component 220 moves horizontally and goes up and down based on the support frame 210, moves to a position corresponding to the warehouse-in conveying line 320 at the bottom of the second goods shelf 110B, and extends toward the warehouse-in conveying line 320 for picking-up;
D. After picking up the goods, the goods picking-up and placing component 220 retracts and moves upward to a position corresponding to a target storage bin 1112 on the first goods shelf 110A or the second goods shelf 110B, extends toward the target storage bin 1112, and places the to-be-warehoused-in goods 600 onto the target storage bin 1112.

By applying the embodiment of the present application, the warehouse-out conveying line 310 and the warehouse-in conveying line 320 are arranged, so that the warehousing-out and warehousing-in of the goods 600 can be carried out simultaneously without interfering with each other, thereby improving the picking-up and placing efficiency and the carrying and guiding efficiency of the warehouse system; and the warehouse-out conveying line 310 and the warehouse-in conveying line 320 are arranged at the bottoms of goods shelves 110 in the storage area 100, which can improve the space utilization rate of the warehouse system.

In some embodiments of the present application, as shown in Figs. 1 and 2, the picking area 400 includes a picking table 410. A second end of the warehouse-out conveying line 310 and a second end of the warehouse-in conveying line 320 are both linked to the picking table 410.

The picking table 410 is used to pick and warehouse-out the to-be-warehoused-out goods 600 that are transported from the second end of the warehouse-out conveying line 310, and to move the to-be-warehoused-in goods 600 to the second end of the warehouse-out conveying line 320.

Specifically, at the picking table 410, a manual picking can be performed or a picking can be performed by a device. The to-be-warehoused-in goods 600 can be goods from the warehouse-out conveying line 310 that have been picked, or goods to be warehoused-in that are placed on the picking table 410 after received by a device or manually received from the outside.

By applying the embodiment of the present application, the picking table 410 is provided to receive the to-be-warehoused-out goods 600 on the warehouse-out conveying line 310 for picking and warehousing-out, or to move the to-be-warehoused-in goods 600 to the warehouse-in conveying line 320.

In some embodiments of the present application, as shown in Figs. 1 and 2, multiple spaced picking tables 410 are provided in the picking area 400.

The goods conveying line 300 further includes a distribution conveying line 330; the second end of the warehouse-out conveying line 310 and the second end of the warehouse-in conveying line 320 at the bottom of each goods shelf 110 are both connected to the distribution conveying line 330.

The distribution conveying line 330 is further connected to the picking tables 410, and is used to distribute and convey the to-be-warehoused-out goods 600 from the second end of each warehouse-out conveying line 310 to a target picking table 410, or to distribute and convey the to-be-warehoused-in goods 600 on each picking table 410 to the second end of a target warehouse-in conveying line 320.

Specifically, as shown in Figs. 1 and 2, the picking area 400 shown in this embodiment includes three picking tables 410, and each picking table can respectively pick to-be-warehoused-out goods 600 on a preset number of the goods shelves 110.

The to-be-warehoused-out goods 600 on the goods shelves 110 on both sides of each laneway 500 are conveyed through one warehouse-out conveying line 310 and finally conveyed to the distribution conveying line 330, which distributes and conveys pieces of goods 600 to respective target picking tables 410.

All of the to-be-warehoused-in goods 600 on each picking table 410 are conveyed onto the distribution conveying line 330, and the distribution conveying line 330 distributes and conveys pieces of the to-be-warehoused-in goods 600 to respective target warehouse-in conveying lines 320 corresponding to respective target goods shelves 110.

By applying the embodiments of the present application, the distribution conveying line 330 is arranged, which can distribute and convey pieces of to-be-warehoused-out goods 600 to the respective target picking tables 410, or distribute and convey pieces of to-be-warehouse-in goods 600 to the respective target warehouse-in conveying lines 320, thereby avoiding that all the warehouse-out conveying lines 310 and the warehouse-in conveying lines 320 are directly connected to the picking tables 410, resulting in too many conveying lines in the picking area 400; the goods 600 are distributed by the distribution conveying line 330, so that the efficiency of warehousing-in and warehousing-out of the warehouse system is improved.

In some embodiments of the present application, see Fig. 5, it is a partial stereoscopic structure diagram of a distribution conveying line of the warehouse system shown in Fig. 1. As shown in Figs. 1, 2 and 5, the distribution conveying line 330 includes a first distribution conveying line 331 and a second distribution conveying line 332 which are arranged side by side and have opposite transmission directions to each other.

The first distribution conveying line 331 is connected to the second end of the warehouse-out conveying line 310 and the second end of the warehouse-in conveying line 320 at the bottom of each goods shelf 110, and the second distribution conveying line 332 is connected to the picking tables 410.

A conveying tail end of the first distribution conveying line 331 is linked to an input end of the second distribution conveying line 332 through a first lifting and load-shifting mechanism 333A, and the conveying tail end of the second distribution conveying line 332 is linked to an input end of the first distribution conveying line 331 through a second lifting and load-shifting mechanism 333B.

During warehousing-out, the first lifting and load-shifting mechanism 333A is used to transport to-be-warehoused-out goods 600 on the first distribution conveying line 331 onto the second distribution conveying line 332; during warehousing-in, the second lifting and load-shifting mechanism 333B is used to transport to-be-warehoused-in goods 600 on the second distribution conveying line 332 onto the first distribution conveying line 331.

Specifically, as shown in Figs. 1 and 2, in the distribution conveying line 330 shown in this embodiment, a first distribution conveying line 331 and a second distribution conveying line 332 are parallel and adjacent to each other, and are arranged in a direction perpendicular to the laneway 500. The first distribution conveying line 331 is located on a side close to the storage area 100.

In other embodiments, the first distribution conveying line 331 and the second distribution conveying line 332 may also be non-straight conveying sections, may not be parallel to each other and/or may not be perpendicular to the laneway 500. It is only necessary that the first distribution conveying line 331 and the second distribution conveying line 332 are adjacent to each other at their ends, so that the goods 600 can be transported between the first distribution conveying line 331 and the second distribution conveying line 332.

The first distribution conveying line 331 and the second distribution conveying line 332 are unidirectional conveying lines. As shown in Fig. 1, in this embodiment, a transmission direction of the first distribution conveying line 331 is from right to left, and a transmission direction of the second distribution conveying line 332 is from left to right. That is, an input end of the first distribution conveying line 331 is the right end, and a conveying tail end of the first distribution conveying line 331 is the left end; an input end of the second distribution conveying line 332 is the left end, and a conveying tail end of the second distribution conveying line 332 is the right end; the left ends of the first distribution conveying line 331 and the second distribution conveying line 332 are linked through a first lifting and load-shifting mechanism 333A, and the right ends of the first distribution conveying line 331 and the second distribution conveying line 332 are linked through a second lifting and load-shifting mechanism 333B.

In other embodiments, the transmission direction of the first distribution conveying line 331 may be from left to right, and the transmission direction of the second distribution conveying line 332 may be from right to left, which is not limited in the present application.

By applying the embodiment of the present application, the first distribution conveying line 331 and the second distribution conveying line 332 are arranged, which can respectively receive the goods 600 from the storage area 100 and from the picking area 400, thereby avoiding the goods 600 from being accumulated on one conveying line, and improving the transmission efficiency of the distribution conveying line 330. The first lifting and load-shifting mechanism 333A and the second lifting and load-shifting mechanism 333B are arranged, so that the goods 600 can be conveyed between the first distribution conveying line 331 and the second distribution conveying line 332.

In some embodiments of the present application, as shown in Fig. 5, the first distribution conveying line 331 and the second distribution conveying line 332 are roller conveying lines including multiple spaced rollers 334.

The first lifting and load-shifting mechanism 333A and the second lifting and load-shifting mechanism 333B both include: multiple groups of conveyor belt wheels 3331, and a lifting mechanism 3332; wherein conveyor belt wheels 3331 in each group are arranged in corresponding roller gaps of the first distribution conveying line 331 and of the second distribution conveying line 332, and the lifting mechanism 3332 is arranged at a bottom of the multiple groups of conveyor belt wheels 3331, and is drivingly connected to the multiple groups of conveyor belt wheels 3331.

When the to-be-warehoused-out goods 600 on the first distribution conveying line 331 move to the roller 334 adjacent to the multiple groups of conveyor belt wheels 3331 of the first lifting and load-shifting mechanism 333A, the multiple groups of conveyor belt wheels 3331 of the first lifting and load-shifting mechanism 333A go up under the drive of the lifting mechanism 3332, lift the to-be-warehoused-out goods 600, and convey them toward the second distribution conveying line 332.

When the to-be-warehoused-in goods 600 on the second distribution conveying line 332 move to the roller 334 adjacent to the multiple groups of conveyor belt wheels 3331 of the second lifting and load-shifting mechanism 333B, the multiple groups of conveyor belt wheels 3331 of the second lifting and load-shifting mechanism 333B go up under the drive of the lifting mechanism 3332, lift the to-be-warehoused-in goods 600, and convey them toward the first distribution conveying line 331.

Specifically, as shown in Fig. 5, the conveyor belt wheel 3331 includes a second conveyor belt 3331A and at least two conveyor wheels 3331B. There are three groups of conveyor belt wheels 3331 in this embodiment, and each group of conveyor belt wheels 3331 can be arranged in adjacent roller gaps as shown in Fig. 5, or in roller gaps with a certain interval, which can increase a lateral size of the lifting and load-shifting mechanism to accommodate larger goods 600. The specific setting can be determined according to the actual scenario, and this application does not limit this.

Taking the first lifting and load-shifting mechanism 333A as an example, in this embodiment, each group of conveyor belt wheels 3331 includes two conveyor wheels 3331B, and the two conveyor wheels 3331B are respectively arranged in roller gaps of the first distribution conveying line 331 and of the second distribution conveying line 332, and the second conveyor belt 3331A is wound around the two conveyor wheels 3331B; the lifting mechanism 3332 is arranged at the bottom of the second conveyor belt 3331A, and can be specifically located in a space between the first distribution conveying line 331 and the second distribution conveying line 332, and is used to, when the to-be-warehoused-out goods 600 move to the end of the first lifting and load-shifting mechanism 333A located at the first distribution conveying line 331, drive the second conveyor belt 3331A and the conveyor wheels 3331B to rise to a height higher than that of the roller 334, so as to lift the to-be-warehoused-out goods 600, and then convey the goods 600 to the end of the first lifting and load-shifting mechanism 333A located at the second distribution conveying line 332, and then drive the second conveyor belt 3331A and the conveyor wheel 3331B to descend to a height lower than that of the roller 334, so as to place the to-be-warehoused-out goods 600 on the second distribution conveying line 332, and the second distribution conveying line 332 continues to convey the to-be-warehoused-out goods 600.

The conveyor belt wheels 3331 are in a raised state only in a case that there are to-be-warehoused-out goods 600 conveyed to the first lifting and load-shifting mechanism 333A or to-be-warehoused-in goods 600 are conveyed to the second lifting and load-shifting mechanism 333B, and the conveyor belt wheels 3331 can remain in a descended state in other cases.

By applying the embodiment of the present application, the conveyor belt wheels 3331 can be raised and lowered in corresponding roller gaps of the first distribution conveying line 331 and of the second distribution conveying line 332, so that when the conveyor belt wheels 3331 are in the lowered state, the goods 600 can move in an original conveying direction, and when the conveyor belt wheels 3331 are in the raised state, the goods 600 can move perpendicularly to the original conveying direction to switch to another conveying line. In addition, the conveyor belt wheels 3331 are arranged in the roller gaps, which improves the space utilization rate of the distribution conveying line 330.

In some embodiments of the present application, as shown in Figs. 1 and 2, each picking table 410 includes: a first picking transmission line 411, a second picking transmission line 412, and a third picking transmission line 413.

The first picking transmission line 411 is linked with the second distribution conveying line 332, and is used to receive the to-be-warehoused-out goods 600 from the second distribution conveying line 332 and transmit them to the second picking transmission line 412.

The second picking transmission line 412 is used to pick the to-be-warehoused-out goods 600 transmitted from the first picking transmission line 411, and to transmit the to-be-warehoused-out goods 600 to the third picking transmission line 413.

The third picking transmission line 413 is linked with the second distribution conveying line 332, and is used to transmit the to-be-warehoused-in goods 600 transmitted from the second picking transmission line 412 to the second distribution conveying line 332.

Specifically, as shown in Fig. 1, the first picking transmission line 411, the second picking transmission line 412 and the third picking transmission line 413 are arranged in a U-shape. Wherein, the second picking transmission line 412 is used for picking up or placing goods manually or by the device.

By applying the embodiment of the present application, the first picking transmission line 411, the second picking transmission line 412 and the third picking transmission line 413 are arranged, so that the picking table 410 can receive the to-be-warehoused-out goods 600 on the second distribution conveying line 332 for picking up or placing goods manually or by the device, and transmit the to-be-warehoused-in goods 600 to the second distribution conveying line 332.

In some embodiments of the present application, as shown in Figs. 1 and 2, a first scanning device 341 is arranged on the conveying tail end of the first distribution conveying line 331, and a second scanning device 342 is arranged on the conveying tail end of the second distribution conveying line 332.

The first scanning device 341 is used to identify a barcode of the to-be-warehoused-out goods 600 on the first distribution conveying line 331, so that after the second distribution conveying line 332 receives the to-be-warehoused-out goods 600, the second distribution conveying line 332 will distribute and convey the to-be-warehoused-out goods 600 to the target picking table 410 according to an identification result of the first scanning device 341.

The second scanning device 342 is used to identify a barcode of the to-be-warehoused-in goods 600 transmitted from the picking table 410, so that after the first distribution conveying line 331 receives the to-be-warehoused-in goods 600, the first distribution conveying line 331 will distribute and convey the to-be-warehoused-in goods 600 to a second end of a target warehouse-in conveying line 320 according to an identification result of the second scanning device 342.

A third scanning device 343 is arranged on the picking table 410, and the third scanning device 343 is used to identify a barcode of the goods 600 on the picking table 410 for picking up or placing the goods.

Specifically, the warehouse system further includes a control device, which is in communication connection with the sky transfer unit 200, the goods conveying line 300 and the picking table 410.

When the to-be-warehoused-out goods 600 pass through the first scanning device 341, the control device receives identification information fed back by the first scanning device 341 and sends an instruction to the second distribution conveying line 332, so that the second distribution conveying line 332 distributes and conveys the to-be-warehoused-out goods 600 to the target picking table 410.

When the to-be-warehoused-in goods 600 pass through the second scanning device 342, the control device receives identification information fed back by the second scanning device 342, and sends an instruction to the first distribution conveying line 331, so that the first distribution conveying line 331 distributes and conveys the to-be-warehoused-in goods 600 to a second end of a target warehouse-in conveying line 320.

As shown in Fig. 1, in this embodiment, the third scanning device 343 is arranged on the second picking transmission line 412; a display 420 is arranged in a U-shaped area enclosed by the picking table 410 and the second distribution conveying line 332. When the to-be-warehoused-out goods 600 transmitted by the first picking transmission line 411, or the to-be-warehoused-in goods 600 placed on the second picking transmission line 412 after received by a device or manually received from the outside, pass through the third scanning device 343, the control device receives identification information fed back by the third scanning device 343, and outputs the identification information and order information of the goods to the display 420 at the picking table 410, so that a staff can refer to the order information on the display 420 to pick up or place the goods.

By applying the embodiment of the present application, the scanning device is arranged on the first distribution conveying line 331 and the second distribution conveying line 332, so that the first distribution conveying line 331 and the second distribution conveying line 332 can distribute and convey the to-be-warehoused-in goods 600 or the to-be-warehoused-out goods 600 according to the identification result of the scanning device, and can accurately convey the goods 600 to the target goods shelf 110 or the target picking table 410; the scanning device is arranged on the picking table 410, so that the staff can pick up or place the goods with reference to the order information corresponding to the goods 600, thereby improving the picking efficiency and the efficiency of warehousing-out and warehousing-in of the warehouse system.

Taking Fig. 1 as an example below, a process of warehousing-out and warehousing-in of the goods 600 on four rows of four deep goods shelves located in the middle of the storage area 100 is firstly described.

During warehousing-in: the to-be-warehoused-in goods 600 are transmitted from the second picking transmission line 412 of the picking table 410 to the second lifting and load-shifting mechanism 333B of the second distribution conveying line 332 through the third picking transmission line 413, and are scanned and identified by the second scanning device 342. Then, the to-be-warehoused-in goods 600 are transmitted to the first distribution conveying line 331 by the second lifting and load-shifting mechanism 333B. The first distribution conveying line 331 distributes and conveys the to-be-warehoused-in goods 600 to a second end of a warehouse-in conveying line 320 corresponding to a target storage bin 1112 according to an identification result. The goods are then conveyed by the warehouse-in conveying line 320 to a bottom docking space 112 of the goods shelf 110 where the target storage bin 1112 is located or a bottom docking space 112 of an adjacent goods shelf 110 to the goods shelf where the target storage bin is located, and are finally moved to the target storage bin 1112 by the sky transfer unit 200.

During warehousing-out: the to-be-warehoused-out goods 600 are picked up by the sky transfer unit 200 in the laneway 500 on the side where the goods 600 are located, and placed on the only warehouse-out conveying line 310 adjacent to this laneway 500, and conveyed to the first distribution conveying line 331 through the warehouse-out conveying line 310, and further conveyed to the first lifting and load-shifting mechanism 333A of the first distribution conveying line 331, and scanned and identified by the first scanning device 341, and then conveyed to the second distribution conveying line 332 by the first lifting and load-shifting mechanism 333A. The second distribution conveying line 332 distributes and conveys the to-be-warehoused-out goods 600 to the first picking transmission line 411 and the second picking transmission line 412 of the target picking table 410 according to an identification result, and the goods are picked up manually or by a device for warehousing-out.

Then, a process of warehousing-out and warehousing-in of the goods 600 on the two double deep goods shelves located respectively on two sides of the storage area 100 is described.

Wherein, a process of warehousing-out and warehousing-in of the goods 600 on the double deep goods shelf on the left side of the storage area 100 is as follows.

During warehousing-in: the to-be-warehoused-in goods 600 are transmitted from the second picking transmission line 412 of the picking table 410 to the second lifting and load-shifting mechanism 333B of the second distribution conveying line 332 through the third picking transmission line 413, and scanned and identified by the second scanning device 342, and then transmitted to the first distribution conveying line 331 by the second lifting and load-shifting mechanism 333B. The first distribution conveying line 331 distributes and conveys the to-be-warehoused-in goods 600 to the second end of the warehouse-in conveying line 320 at the bottom of this goods shelf 110 according to an identification result, and the goods are then conveyed by the warehouse-in conveying line 320 to the bottom docking space 112 of this goods shelf 110, and finally moved to the target storage bin 1112 on this goods shelf 110 by the sky transfer unit 200 in the laneway 500.

During warehousing-out: the to-be-warehoused-out goods 600 are picked up by the sky transfer unit 200 in the laneway 500, and placed on the warehouse-out conveying line 310 at the bottom of an adjacent goods shelf 110 to this goods shelf 110, and conveyed to the first distribution conveying line 331 through the warehouse-out conveying line 310, and further conveyed to the first lifting and load-shifting mechanism 333A of the first distribution conveying line 331, and scanned and identified by the first scanning device 341, and then transmitted to the second distribution conveying line 332 by the first lifting and load-shifting mechanism 333A. The second distribution conveying line 332 distributes and conveys the to-be-warehoused-out goods 600 to the first picking transmission line 411 and the second picking transmission line 412 of the target picking table 410 according to an identification result, and the goods are picked up manually or by a device for warehousing-out.

A process of warehousing-out and warehousing-in of the goods 600 on the double deep goods shelf on the right side of the storage area 100 is as follows.

During warehousing-in: the to-be-warehoused-in goods 600 are transmitted from the second picking transmission line 412 of the picking table 410 to the second lifting and load-shifting mechanism 333B of the second distribution conveying line 332 through the third picking transmission line 413, and scanned and identified by the second scanning device 342, and then transmitted to the first distribution conveying line 331 by the second lifting and load-shifting mechanism 333B. The first distribution conveying line 331 distributes and conveys the to-be-warehoused-in goods 600 to the second end of the warehouse-in conveying line 320 at the bottom of an adjacent goods shelf 110 to this goods shelf 110 according to an identification result, the goods are conveyed by the warehouse-in conveying line 320 to the bottom docking space 112 of the adjacent goods shelf 110 to this goods shelf 110, and finally moved to the target storage bin 1112 on the goods shelf 110 by the sky transfer unit 200 in the laneway 500.

During warehousing-out: the to-be-warehoused-out goods 600 are picked up by the sky transfer unit 200 in the laneway 500 and placed on the warehouse-out conveying line 310 at the bottom of the goods shelf 110, and conveyed to the first distribution conveying line 331 through the warehouse-out conveying line 310, and further conveyed to the first lifting and load-shifting mechanism 333A of the first distribution conveying line 331, and scanned and identified by the first scanning device 341, and then transmitted to the second distribution conveying line 332 by the first lifting and load-shifting mechanism 333A. The second distribution conveying line 332 distributes and conveys the to-be-warehoused-out goods 600 to the first picking transmission line 411 and the second picking transmission line 412 of the target picking table 410 according to an identification result, and the goods are picked up manually or by a device for warehousing-out.

In some embodiments of the present application, as shown in Fig. 3, different storage bins 1112 can stack goods 600 with different sizes; the goods 600 stored in each storage bin 1112 may be of the same or different sizes.

Specifically, as shown in Fig. 3, multiple goods 600 can be stacked on one storage bin 1112, which can improve the space utilization and storage capacity of the goods shelf 110. Wherein, the goods 600 have the same size but can be of different types. If target to-be-warehoused-out goods 600 are located in the middle, the sky transfer unit 200 can temporarily move other goods 600 above the target to-be-warehoused-out goods 600 to another storage bin 1112, and place said other goods 600 that have been moved back to the original storage bin 1112 after warehousing-out is completed.

By applying the embodiment of the present application, different storage bins 1112 can stack goods 600 with different sizes, thereby improving the space utilization and storage capacity of the goods shelf 110 and reducing the cost of the goods shelf 110.

Then, the sky transfer unit 200 in the warehouse system of the embodiment of the present application is described in detail.

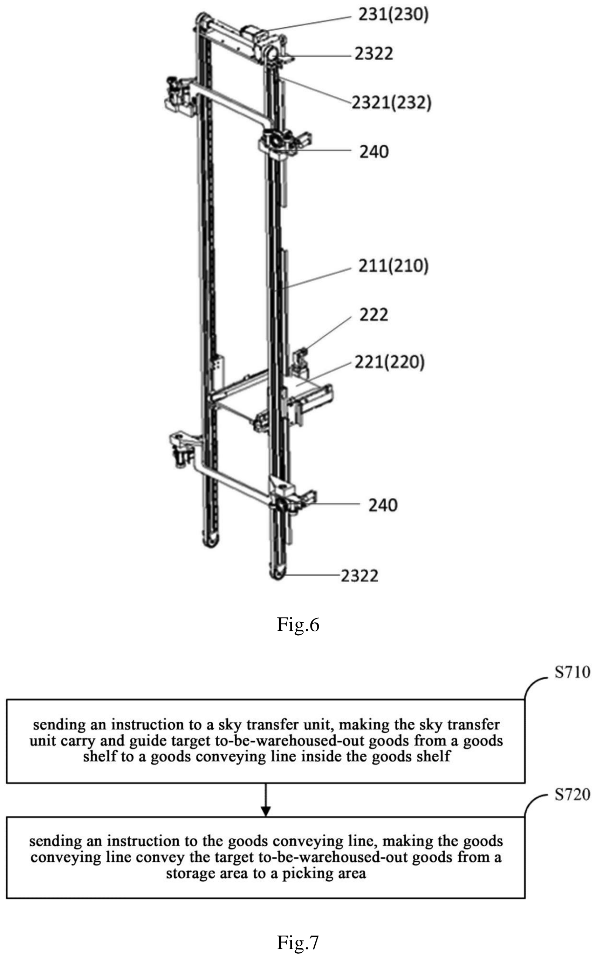

In some embodiments of the present application, referring to Fig. 6, it is a schematic diagram of a stereoscopic structure of the sky transfer unit shown in Fig. 1. As shown in Fig. 6, the sky transfer unit 200 includes a support frame 210 and a goods picking-up and placing component 220.

The support frame 210 is hung on the goods shelf 110 and is movably connected to a side of the goods shelf 110 along a length direction of the laneway 500.

The goods picking-up and placing component 220 is arranged on the support frame 210, and can go up and down along the support frame 210, and can move horizontally relative to the goods shelf 110 along with the support frame 210, so as to pick up and place goods 600 at different positions on the goods shelf 110 and also on the goods conveying line 300 inside the goods shelf 110.

Specifically, as shown in Figs.3 and 6, the sky transfer unit 200 can drive a horizontal movement of the goods picking-up and placing component 220 based on the support frame 210 to pick up and place different goods 600 in the length direction of the goods shelves 110 on both sides of the laneway 500 and the goods 600 on the goods conveying line 300 inside the goods shelf 110, and pick up and place different goods 600 in the height direction of the goods shelves 110 on both sides of the laneway 500 based on the lifting and lowering movement of the goods picking-up and placing component 220 along the support frame 210. In addition, the sky transfer unit 200 can also pick up and place goods 600 among different storage bins 1112 on the goods shelves 110 to put the goods in order.

The support frame 210 may have a variety of structures, and may be a single column or a column gantry composed of two columns, and this application does not limit this.

In a specific embodiment, as shown in Fig. 6, the support frame 210 is a column gantry, including two columns 211 that are oppositely arranged. The goods picking-up and placing component 220 is arranged between the two columns 211 of the support frame 210, and is slidably connected to the columns 211 on both sides.

The specific structure of the goods picking-up and placing component 220 can be a fork, a clamping plate, a suction cup, a hook or a lifting plate, etc. As shown in Fig. 6, in a specific embodiment of the present application, the goods picking-up and placing component 220 includes a goods platform 221, a hook mechanism 222 and an expansion component. The goods platform 221 is slidably connected to the two columns 211 of the support frame 210, and the hook mechanism 222 and the expansion component are arranged on the goods platform 221. The expansion component can drive the goods platform 221 and the hook mechanism 222 to extend out of the support frame 210 in the horizontal direction, and the hook mechanism 222 can hook the goods 600 and place them on the goods platform 221.

By applying the embodiments of the present application, the sky transfer unit 200 is hung on the goods shelf 110 through the support frame 210 and is located in the laneway, thereby improving the space utilization rate of the warehouse system; the sky transfer unit 200 moves along the laneway 500, and picks up and places, on the basis of the goods picking-up and placing component 220, the goods 600 at different positions on the goods shelves 110 on both sides of the laneway 500 and the goods 600 on the goods conveying lines 300 inside the goods shelves 110. There is no need to carry and guide the goods between the storage area 100 and the picking area 400, thereby improving the picking-up and placing efficiency of the warehouse system.

In some embodiments of the present application, as shown in Figs. 3 and 6, at least one spaced horizontal track 120 is arranged in the vertical direction on one side of the goods shelf 110 close to the laneway 500; the support frame 210 is movably connected to the horizontal track 120, so that the support frame 210 and the goods picking-up and placing component 220 can slide horizontally along the horizontal track 120 to pick up and place different goods 600 on the goods shelves 110 on both sides of the laneway 500 and also on the goods conveying lines 300 inside the goods shelves 110.

Specifically, as shown in Fig. 6, at least one driving wheel group 240 is provided on the support frame 210, and the height of the driving wheel group 240 corresponds to the height of the horizontal track 120. The support frame 210 is connected to the horizontal track 120 in a rolling way based on the driving wheel group 240, so that the support frame 210 can be hung on the goods shelf 110, and the support frame 210 can move horizontally along the horizontal track 120 under the drive of the driving wheel group 240.

By applying the embodiment of the present application, the support frame 210 can drive the goods picking-up and placing component 220 to move horizontally based on the horizontal track 120 to pick up and place different goods 600 in the length direction of the goods shelves 110 on both sides of the laneway 500, as well as the goods 600 on the goods conveying lines 300 inside the goods shelves 110.

In some embodiments of the present application, as shown in Fig. 6, the sky transfer unit 200 further includes a lifting component 230. The lifting component 230 is arranged on the support frame 210, and is used to drive the goods picking-up and placing component 220 to rise and fall along the support frame 210.

The goods picking-up and placing component 220 is installed on the lifting component 230, and is used to extend toward the goods shelves 110 on both sides of the laneway 500 or the goods conveying lines 300 inside the goods shelves 110 on both sides of the laneway 500 to pick up and place the goods 600.

As shown in Fig. 6, in a specific embodiment of the present application, the support frame 210 is a column gantry, and the lifting component 230 includes a lifting motor 231 and at least one group of transmission mechanisms 232.

The at least one group of transmission mechanisms 232 is arranged on the column 211 and fixedly connected to the goods picking-up and placing component 220. The lifting motor 231 is fixedly arranged on the top of the column gantry and is used to drive at least one group of transmission mechanisms 232 to drive the goods picking-up and placing component 220 to rise and fall along the support frame 210.

In a specific embodiment of the present application, the lifting component 230 includes two groups of transmission mechanisms 232, which are respectively arranged on the two columns 211 of the column gantry.

Each group of transmission mechanisms 232 includes: a conveyor belt 2321 and two transmission wheels 2322 respectively arranged at the top and bottom of the support frame 210. The lifting motor 231 is drivingly connected to a top transmission wheel 2322; the conveyor belt 2321 passes around a bottom transmission wheel 2322 and the top transmission wheel 2322, and is fixedly connected to the goods picking-up and placing component 220 at both ends.

The lifting motor 231 drives the conveyor belt 2321, the bottom transmission wheel 2322 and the top transmission wheel 2322 to drive the goods picking-up and placing component 220 to slide vertically along the column gantry to pick up and place the goods 600 at different heights on the goods shelves 110 on both sides of the laneway 500, as well as the goods 600 on the goods conveying lines 300.

By applying the embodiment of the present application, the lifting component 230 drives the goods picking-up and placing component 220 to go up and down, so that the goods picking-up and placing component 220 can slide vertically along the support frame 210 to pick up and place the goods 600 at different heights on the goods shelves 110 on both sides of the laneway 500, as well as the goods 600 on the goods conveying lines 300.

In some embodiments of the present application, as shown in Fig. 3, the goods shelf 110 includes an upper storage space 111 and a bottom docking space 112.

The storage space 111 includes multiple storage layers 1111 spaced in a vertical direction for storing the goods 600; the docking space 112 is located below the storage space 111, and the first end of the goods conveying line 300 extends to the docking space 112.

The goods picking-up and placing component 220 is used to pick up and place goods 600 between the goods shelves 110 on both sides of the laneway 500 and the goods conveying lines 300 inside the goods shelves 110.

Specifically, a storage layer 1111 at the lowest bottom of the storage space 111 has a predetermined height from the ground, forming the bottom docking space 112 of the goods shelf 110.

When the sky transfer unit 200 is used for warehousing-out, the goods picking-up and placing component 220 moves horizontally and goes up and down based on the support frame 210, moves to a position corresponding to the target to-be-warehoused-out goods 600, and extends toward the target to-be-warehoused-out goods 600 for picking-up; after picking up the goods, the goods picking-up and placing component 220 retracts and moves downward to a position corresponding to the goods conveying line 300, and then extends toward the goods conveying line 300, places the to-be-warehoused-out goods 600 on the goods conveying line 300, and the goods conveying line 300 conveys the to-be-warehoused-out goods 600 to the picking area 400 for warehousing-out.

When the sky transfer unit 200 is used for warehousing-in, the goods picking-up and placing component 220 moves horizontally and goes up and down based on the support frame 210, moves to a position corresponding to the goods conveying line 300, and extends toward the goods conveying line 300 for picking-up; after picking up the goods, the goods picking-up and placing component 220 retracts and moves upward to a position corresponding to the target storage bin 1112, and then extends toward the target storage bin 1112 to place the to-be-warehoused-in goods 600 in the target storage bin 1112.

By applying the embodiment of the present application, the sky transfer unit 200 can complete warehousing-out and warehousing-in of the goods 600 through the goods picking-up and placing component 220 moving between the storage space 111 and the docking space 112 for picking-up and placing goods. There is no need to carry and guide the goods between the storage area 100 and the picking area 400, which reduces the moving range of the sky transfer unit 200 and improves the picking-up and placing efficiency of the warehouse system.

The warehouse system of the embodiment of the present application further includes: a control device; wherein the control device is in communication connection with the sky transfer unit 200 and the goods conveying line 300, and is used to control the sky transfer unit 200 to pick up and place goods 600 between the goods shelf 110 and the goods conveying line 300 inside the goods shelf 110, and to control the goods conveying line 300 to convey the goods 600 between the storage area 100 and the picking area 400.

Below, a warehousing-out method provided by an embodiment of the present application is described in detail.

The warehousing-out method provided by the embodiment of the present application is applied to the control device. Referring to Fig. 7, it is a flowchart of a first embodiment of the warehousing-out method provided by the present application. As shown in Fig. 7, the process includes the following steps:
Step S710, sending an instruction to a sky transfer unit, making the sky transfer unit move target to-be-warehoused-out goods from a goods shelf to a goods conveying line inside the goods shelf;
Step S720, sending an instruction to the goods conveying line, making the goods conveying line convey the target to-be-warehoused-out goods from a storage area to a picking area.

The warehousing-out method in the embodiment of the present application is applied to the warehouse system, and the method realizes warehouse-out of goods by instructing the sky transfer unit to move the target to-be-warehoused-out goods from the goods shelf to the goods conveying line inside the goods shelf, and instructing the goods conveying line to convey the target to-be-warehoused-out goods from the storage area to the picking area. In addition, a movement of the sky transfer unit to pick up and place the goods and a transmission of the goods conveying line can be carried out simultaneously without interfering with each other, thereby improving the efficiency of picking up and placing goods and the efficiency of handling in the warehouse system.

In some embodiments of the present application, the sky transfer unit includes a support frame and a picking-up and placing component. The goods shelf includes a storage space, and the storage space includes multiple storage layers spaced in a vertical direction, and multiple storage bins are provided on each storage layer. The goods conveying line includes a warehouse-out conveying line and a distribution conveying line. A picking area includes multiple picking tables. A second end of the warehouse-out conveying line and/or a second end of the warehouse-in conveying line at the bottom of each goods shelf is/are connected to the distribution conveying line. The distribution conveying line is also connected to the picking tables.

The control device is in communication connection with the warehouse-out conveying line, the distribution conveying line and the picking table.

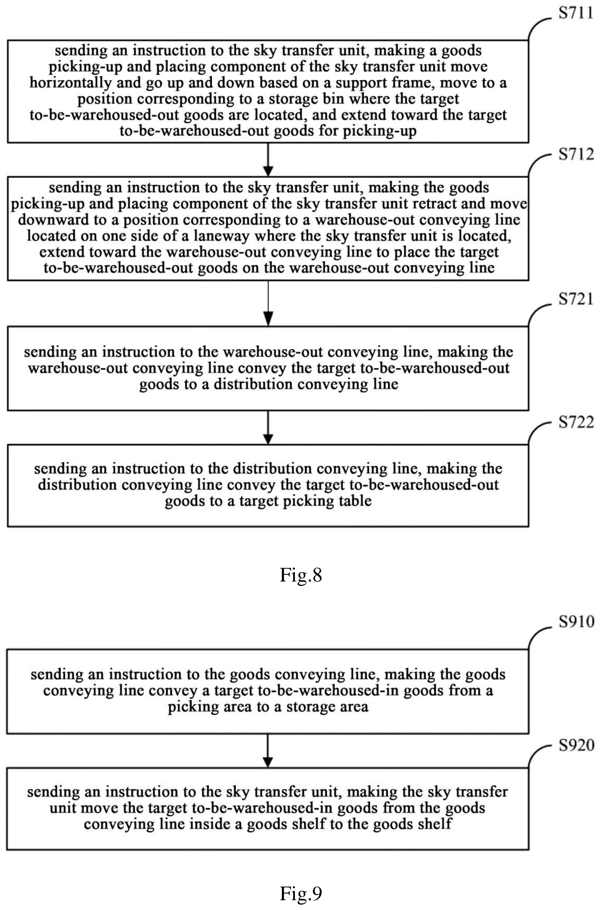

Referring to Fig. 8, it is a flowchart of a second embodiment of the warehousing-out method provided by the present application. As shown in Fig. 8, the process includes the following steps:
Step S711, sending an instruction to a sky transfer unit, making a picking-up and placing component of the sky transfer unit move horizontally and go up and down based on a support frame, move to a position corresponding to a storage bin where target to-be-warehoused-out goods are located, and extend toward the target to-be-warehoused-out goods for picking-up;
Step S712, sending an instruction to the sky transfer unit, making the picking-up and placing component of the sky transfer unit retract and move downward to a position corresponding to a warehouse-out conveying line located on one side of a laneway where the sky transfer unit is located, extend toward the warehouse-out conveying line, and place the target to-be-warehoused-out goods onto the warehouse-out conveying line;
Step S721, sending an instruction to the warehouse-out conveying line, making the warehouse-out conveying line convey the target to-be-warehoused-out goods to a distribution conveying line;
Step S722, sending an instruction to the distribution conveying line, making the distribution conveying line convey the target to-be-warehoused-out goods to a target picking table.

Specifically, a first scanning device on the distribution conveying line is in communication connection with a control device, and can identify a barcode of the target to-be-warehoused-out goods, and feedback identification information to the control device. The control device determines the target picking table based on the identification information, and sends an instruction containing location information of the target picking table to the distribution conveying line.

A third scanning device of the picking table is in communication connection with the control device, and can identify a barcode of the target to-be-warehoused-out goods, and feedback identification information to the control device. The control device outputs the identification information and order information of the goods to a display of the picking table based on the identification information, so that a staff can pick and warehouse-out the goods according to the order information on the display.

Below, a warehousing-in method provided by an embodiment of the present application is described in detail.

The warehousing-in method provided by the embodiment of the present application is applied to the control device. Referring to Fig. 9, it is a flowchart of a first embodiment of the warehousing-in method provided by the present application. As shown in Fig. 9, the process includes the following steps:
Step S910, sending an instruction to a goods conveying line, making the goods conveying line convey target to-be-warehoused-in goods from a picking area to a storage area.

Step S920, sending an instruction to a sky transfer unit, making the sky transfer unit move the target to-be-warehoused-in goods from the goods conveying line inside a goods shelf to the goods shelf.

The warehousing-in method in the embodiment of the present application is applied to the warehouse system, and the method realizes warehouse-in of goods by instructing the goods conveying line to move the target to-be-warehoused-in goods from the picking area to the storage area, and instructing the sky transfer unit to move the target to-be-warehoused-in goods from the goods conveying line inside the goods shelf to the goods shelf. In addition, a movement of the sky transfer unit to pick up and place the goods and a transmission of the goods conveying line can be carried out simultaneously without interfering with each other, thereby improving the efficiency of picking up and placing goods and the efficiency of handling in the warehouse system.

In some embodiments of the present application, the sky transfer unit includes a support frame and a goods picking-up and placing component. The goods shelf includes a storage space, and the storage space includes multiple storage layers spaced in a vertical direction, and multiple storage bins are provided on each storage layer. The goods conveying line includes a warehouse-in conveying line and a distribution conveying line. A second end of the warehouse-out conveying line and/or a second end of the warehouse-in conveying line at the bottom of each goods shelf is/are connected to the distribution conveying line. The distribution conveying line is also connected to the picking tables.

The control device is in communication connection with the warehouse-in conveying line and the distribution conveying line.

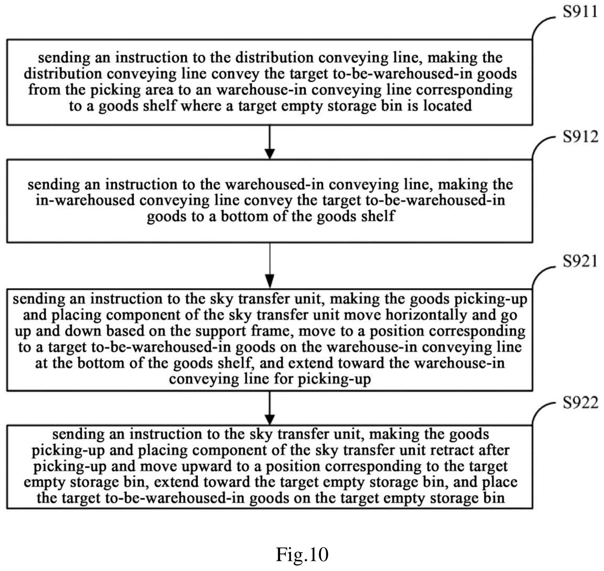

Referring to Fig. 10, it is a flowchart of a second embodiment of the warehousing-in method provided by the present application. As shown in Fig. 10, the process includes the following steps:
Step S911, sending an instruction to a distribution conveying line, making the distribution conveying line convey target to-be-warehoused-in goods from a picking area to a warehouse-in conveying line corresponding to a goods shelf where a target empty storage bin is located;
Step S912, sending an instruction to the warehouse-in conveying line, making the warehouse-in conveying line convey the target to-be-warehoused-in goods to a bottom of the goods shelf;
Step S921, sending an instruction to a sky transfer unit, making a goods picking-up and placing component of the sky transfer unit move horizontally and go up and down based on a support frame, move to a position corresponding to the target to-be-warehoused-in goods on the warehouse-in conveying line at the bottom of the goods shelf, and extend toward the warehouse-in conveying line for picking-up;
Step S922, sending an instruction to the sky transfer unit, making the goods picking-up and placing component of the sky transfer unit retract and move upward to a position corresponding to the target empty storage bin after picking up the goods, extend toward the target empty storage bin, and place the target to-be-warehoused-in goods in the target empty storage bin.

Specifically, when a warehouse-in conveying line is arranged at the bottom of a goods shelf where the target empty storage bin is located, the target to-be-warehoused-in goods can be directly conveyed to the warehouse-in conveying line; when a warehouse-out conveying line is arranged at the bottom of the goods shelf where the target empty storage bin is located, a bottom of a goods shelf separated from the goods shelf by a laneway is the warehouse-in conveying line, and the target to-be-warehoused-in goods need to be conveyed to the warehouse-in conveying line and carried and guided to the target empty storage bin by the sky transfer unit in the laneway.

It should be noted that in this article, relational terms such as first and second are only to distinguish one entity or operation from another entity or operation, and do not necessarily require or imply any actual relationship or order between these entities or operations. Moreover, the terms "include", "contain", or any other variation thereof are intended to encompass non-exclusive inclusion, such that a process, method, item, or device that includes a series of elements not only includes those elements, but also other elements that are not explicitly listed, or also include elements inherent in such a process, method, item, or device. Without further limitations, the elements limited by the statement "including one..." do not exclude the existence of other identical elements in the process, method, item, or device that includes the elements. The above descriptions are only preferred embodiments of the present invention, and are not intended to limit the scope of protection of the present invention. Any modifications, equivalent replacements, improvements, etc. made within the spirit and principles of the present invention shall be included within the scope of protection of the present invention.

## Claims

1. A warehouse system, which comprises a storage area (100), sky transfer units (200), goods conveying lines (300) and a picking area (400); wherein
the storage area (100) comprises multiple spaced goods shelves (110), and a laneway (500) extending along a length direction of the goods shelves (110) is formed between adjacent goods shelves (110);
one of the goods conveying lines (300) has a first end extending to an inside of a goods shelf (110) of the storage area (100) and a second end extending to the picking area (400), and is used to convey goods (600) between the storage area (100) and the picking area (400);
one of the sky transfer units (200) is hung on a side of a goods shelf (110) close to the laneway (500) and is used to move along the laneway (500) and pick up and place the goods (600) between the goods shelf (110) and the goods conveying line (300) inside the goods shelf (110).

2. The warehouse system according to claim 1, wherein a goods shelf (110) on only one side of the laneway (500) is provided with a sky transfer unit (200); the sky transfer unit (200) is used to pick up and place goods (600) on goods shelves (110) on both sides of the laneway (500), as well as goods (600) on the goods conveying lines (300) inside the goods shelves (110) on both sides of the laneway (500).

3. The warehouse system according to claim 1, wherein one of the sky transfer units (200) comprises a support frame (210) and a goods picking-up and placing component (220);
the support frame (210) is hung on a goods shelf (110) and is movably connected to a side of the goods shelf (110) along a length direction of the laneway (500);
the goods picking-up and placing component (220) is arranged on the support frame (210) and is capable of going up and down along the support frame (210) and horizontally moving relative to the goods shelf (110) along with the support frame (210), to pick up and place goods (600) at different positions on the goods shelf (110) and the goods conveying line (300) inside the goods shelf (110).

4. The warehouse system according to claim 3, wherein,
one of the goods shelves (110) comprises an upper storage space (111) and a bottom docking space (112);
the storage space (111) comprises multiple storage layers (1111) spaced in a vertical direction and used to store the goods (600);
the docking space (112) is located below the storage space (111), and a first end of a goods conveying line (300) extends to the docking space (112);
the goods picking-up and placing component (220) is used to pick up and place the goods (600) between the goods shelves (110) on both sides of the laneway (500) and the goods conveying lines (300) inside these goods shelves (110).

5. The warehouse system according to claim 1, wherein,
the goods conveying lines (300) comprise warehouse-out conveying lines (310) and warehouse-in conveying lines (320); each of the warehouse-out conveying lines (310) and the warehouse-in conveying lines (320) is arranged at a bottom of a goods shelf (110) of the storage area (100), and one side of each laneway (500) is provided with a warehouse-out conveying line (310) and the other side is provided with a warehouse-in conveying line (320);
a first end of each of the warehouse-out conveying lines (310) and of the warehouse-in conveying lines (320) extends in a parallel way to the bottom of the goods shelf (110); and a second end of each of the warehouse-out conveying lines (310) and of the warehouse-in conveying lines (320) extends to the picking area (400) respectively;
one of the warehouse-out conveying lines (310) is used to output to-be-warehoused-out goods (600) that are taken out by the sky transfer unit (200) from a goods shelf (110) and placed on the warehouse-out conveying line (310), to the picking area (400);
one of the warehouse-in conveying lines (320) is used to input to-be-warehoused-in goods (600) received from the picking area (400) to a bottom of a goods shelf (110), so that the sky transfer unit (200) moves the to-be-warehoused-in goods (600) on the warehouse-in conveying line (320) onto the goods shelf (110).

6. The warehouse system according to claim 5, wherein,
the picking area (400) comprises a picking table (410);
the second end of one of the warehouse-out conveying lines (310) and the second end of one of the warehouse-in conveying lines (320) are both linked with the picking table (410);
the picking table (410) is used to pick and warehouse-out the to-be-warehoused-out goods (600) transmitted from the second end of the warehouse-out conveying line (310), and to move the to-be-warehoused-in goods (600) to the second end of the warehouse-in conveying line (320).

7. The warehouse system according to claim 6, wherein,
the picking area (400) is provided with multiple spaced picking tables (410);
the goods conveying lines (300) further comprise a distribution conveying line (330);
the second end of the warehouse-out conveying line (310) and the second end of the warehouse-in conveying line (320) at a bottom of each respective goods shelf (110) are connected to the distribution conveying line (330);
the distribution conveying line (330) is further connected to the picking tables (410) and is used to distribute and convey the to-be-warehoused-out goods (600) at the second end of each warehouse-out conveying line (310) to a target picking table (410), or to distribute and convey the to-be-warehoused-in goods (600) on the picking tables (410) to a second end of a target warehouse-in conveying line (320).

8. The warehouse system according to claim 7, wherein,
the distribution conveying line (330) comprises a first distribution conveying line (331) and a second distribution conveying line (332) which are arranged side by side and have opposite transmission directions;
the first distribution conveying line (331) is connected to the second end of the warehouse-out conveying line (310) and the second end of the warehouse-in conveying line (320) at the bottom of each respective goods shelf (110), and the second distribution conveying line (332) is connected to the picking tables (410);
a conveying tail end of the first distribution conveying line (331) is linked to an input end of the second distribution conveying line (332) through a first lifting and load-shifting mechanism (333A), and a conveying tail end of the second distribution conveying line (332) is linked to an input end of the first distribution conveying line (331) through a second lifting and load-shifting mechanism (333B);
during warehousing-out, the first lifting and load-shifting mechanism (333A) is used to transfer to-be-warehoused-out goods (600) on the first distribution conveying line (331) to the second distribution conveying line (332); during warehousing-in, the second lifting and load-shifting mechanism (333B) is used to transfer to-be-warehoused-in goods (600) on the second distribution conveying line (332) to the first distribution conveying line (331).

9. The warehouse system according to claim 8, wherein,
the first distribution conveying line (331) and the second distribution conveying line (332) are roller conveying lines, comprising multiple spaced rollers (334);
each of the first lifting and load-shifting mechanism (333A) and the second lifting and load-shifting mechanism (333B) comprises: multiple groups of conveyor belt wheels (3331), and a lifting mechanism (3332); conveyor belt wheels (3331) in each group are arranged in corresponding roller gaps of the first distribution conveying line (331) and of the second distribution conveying line (332); the lifting mechanism (3332) is arranged at a bottom of the multiple groups of conveyor belt wheels (3331) and is drivingly connected to the multiple groups of conveyor belt wheels (3331);
when to-be-warehoused-out goods (600) on the first distribution conveying line (331) move onto a roller (334) adjacent to the multiple groups of conveyor belt wheels (3331) of the first lifting and load-shifting mechanism (333A), the multiple groups of conveyor belt wheels (3331) of the first lifting and load-shifting mechanism (333A) rise under a drive of the lifting mechanism (3332), lift the to-be-warehoused-out goods (600), and convey them toward the second distribution conveying line (332);
when to-be-warehoused-in goods (600) on the second distribution conveying line (332) move onto a roller (334) adjacent to the multiple groups of conveyor belt wheels (3331) of the second lifting and load-shifting mechanism (333B), the multiple groups of conveyor belt wheels (3331) of the second lifting and load-shifting mechanism (333B) rise under a drive of the lifting mechanism (3332), lift the to-be-warehoused-in goods (600), and convey them toward the first distribution conveying line (331).

10. The warehouse system according to claim 8, wherein,
each of the picking tables (410) comprises a first picking transmission line (411), a second picking transmission line (412) and a third picking transmission line (413);
the first picking transmission line (411) is linked with the second distribution conveying line (332) and is used to receive the to-be-warehoused-out goods (600) from the second distribution conveying line (332) and transmit them to the second picking transmission line (412);
the second picking transmission line (412) is used to pick the to-be-warehoused-out goods (600) transmitted from the first picking transmission line (411), and to transmit the to-be-warehoused-out goods (600) to the third picking transmission line (413);
the third picking transmission line (413) is linked with the second distribution conveying line (332) and is used to transmit the to-be-warehoused-in goods (600) transmitted from the second picking transmission line (412) to the second distribution conveying line (332).

11. The warehouse system according to claim 8, wherein,
a first scanning device (341) is arranged at the conveying tail end of the first distribution conveying line (331), and a second scanning device (342) is arranged at the conveying tail end of the second distribution conveying line (332);
the first scanning device (341) is used to identify a barcode of the to-be-warehoused-out goods (600) on the first distribution conveying line (331), so that after the second distribution conveying line (332) receives the to-be-warehoused-out goods (600), the second distribution conveying line (332) distributes and conveys the to-be-warehoused-out goods (600) to a target picking table (410) according to an identification result of the first scanning device (341);
the second scanning device (342) is used to identify a barcode of the to-be-warehoused-in goods (600) transmitted from the picking table (410), so that after the first distribution conveying line (331) receives the to-be-warehoused-in goods (600), the first distribution conveying line (331) distributes and conveys the goods to-be-warehoused-in goods (600) to a second end of a target warehouse-in conveying line (320) according to an identification result of second scanning device (342);
one of the picking tables (410) is provided with a third scanning device (343), and the third scanning device (343) is used to identify a barcode of the goods (600) on the picking tables (410) so as to pick up or place the goods.

12. The warehouse system according to claim 3, wherein,
at least one spaced horizontal track (120) is arranged in the vertical direction on one side of the goods shelf (110) close to the laneway (500); the support frame (210) is movably connected to the horizontal track (120), so that the support frame (210) and the goods picking-up and placing component (220) slide horizontally along the horizontal track (120) to pick up and place different goods (600) on the goods shelves (110) on both sides of the laneway (500) and on the goods conveying lines (300) inside the goods shelves (110).

13. The warehouse system according to claim 3, wherein,
one of the sky transfer units (200) further comprises a lifting component (230); the lifting component (230) is arranged on the support frame (210) and is used to drive the goods picking-up and placing component (220) to go up and down along the support frame (210);
the goods picking-up and placing component (220) is installed on the lifting component (230) and is used to extend out toward the goods shelves (110) on both sides of the laneway (500) or the goods conveying lines (300) inside the goods shelves (110) on both sides of the laneway (500) to pick up and place goods (600).

14. The warehouse system according to claim 4, wherein,
multiple storage bins (1112) are provided on one of the storage layers (1111); different storage bins (1112) are capable of stacking goods (600) with different sizes; and the goods (600) stored in each storage bin (1112) are of the same or different sizes.

15. The warehouse system according to any one of claims 1 to 14, wherein the system further comprises: a control device; the control device is in communication connection with the sky transfer units (200) and the goods conveying lines (300), and is used to control the sky transfer units (200) to pick up and place the goods (600) between the goods shelves (110) and the goods conveying lines (300) inside the goods shelves (110), and to control the goods conveying lines (300) to convey the goods (600) between the storage area (100) and the picking area (400).

16. A warehousing-out method, which is applied to the control device in the warehouse system according to claim 15, the method comprising:
sending an instruction to a sky transfer unit, making the sky transfer unit carry and guide target to-be-warehoused-out goods from a goods shelf to a goods conveying line inside the goods shelf;
sending an instruction to the goods conveying line, making the goods conveying line convey the target to-be-warehoused-out goods from the storage area to the picking area.

17. The warehousing-out method according to claim 16, wherein,
the sky transfer unit comprises a support frame and a goods picking-up and placing component;
the goods shelf comprises a storage space, the storage space comprises multiple storage layers spaced in a vertical direction, and multiple storage bins are provided on one of the storage layers;
the goods conveying line comprises a warehouse-out conveying line, and the control device is in communication connection with the warehouse-out conveying line;
sending the instruction to the sky transfer unit, making the sky transfer unit move the target to-be-warehoused-out goods from the goods shelf to the goods conveying line inside the goods shelf comprises:
sending an instruction to the sky transfer unit, making the goods picking-up and placing component of the sky transfer unit move horizontally and go up and down based on the support frame, move to a position corresponding to a storage bin where the target to-be-warehoused-out goods are located, and extend toward the target to-be-warehoused-out goods for picking-up;
sending an instruction to the sky transfer unit, making the goods picking-up and placing component of the sky transfer unit retract and move downward to a position corresponding to the warehouse-out conveying line located on one side of a laneway where the sky transfer unit is located, extend toward the warehouse-out conveying line, and place the target to-be-warehoused-out goods onto the warehouse-out conveying line.

18. The warehousing-out method according to claim 16, wherein,
the goods conveying line comprises a warehouse-out conveying line and a distribution conveying line, and the control device is in communication connection with the warehouse-out conveying line and the distribution conveying line; the picking area comprises multiple picking tables;
sending the instruction to the goods conveying line, making the goods conveying line convey the target to-be-warehoused-out goods from the storage area to the picking area comprises:
sending an instruction to the warehouse-out conveying line, making the warehouse-out conveying line convey the target to-be-warehoused-out goods to the distribution conveying line;
sending an instruction to the distribution conveying line, making the distribution conveying line convey the target to-be-warehoused-out goods to a target picking table.

19. A warehousing-in method, which is applied to the control device in the warehouse system according to claim 15, the method comprising:
sending an instruction to a goods conveying line, making the goods conveying line convey target to-be-warehoused-in goods from the picking area to the storage area;
sending an instruction to a sky transfer unit, making the sky transfer unit carry and guide the target to-be-warehoused-in goods from the goods conveying line locating inside a goods shelf to the goods shelf.

20. The warehousing-in method according to claim 19, wherein,
the goods conveying line comprises a warehouse-in conveying line and a distribution conveying line, and the control device is in communication connection with the warehouse-in conveying line and the distribution conveying line;
sending the instruction to the goods conveying line, making the goods conveying line convey the target to-be-warehoused-in goods from the picking area to the storage area comprises:
sending an instruction to the distribution conveying line, making the distribution conveying line convey the target to-be-warehoused-in goods from the picking area to a warehouse-in conveying line corresponding to a goods shelf where a target empty storage bin is located;
sending an instruction to the warehouse-in conveying line, making the warehouse-in conveying line convey the target to-be-warehoused-in goods to a bottom of the goods shelf.

21. The warehousing-in method according to claim 19, wherein,
the sky transfer unit comprises a support frame and a goods picking-up and placing component;
the goods conveying line comprises a warehouse-in conveying line, and the control device is in communication connection with the warehouse-in conveying line;
the goods shelf comprises a storage space, and the storage space comprises multiple storage layers spaced in a vertical direction; multiple storage bins are provided on one of the storage layers;
sending the instruction to the sky transfer unit, making the sky transfer unit carry and guide the target to-be-warehoused-in goods from the goods conveying line located inside the goods shelf to the goods shelf comprises:
sending an instruction to the sky transfer unit, making the goods picking-up and placing component of the sky transfer unit move horizontally and go up and down based on the support frame, move to a position corresponding to the target to-be-warehoused-in goods on the warehouse-in conveying line at the bottom of the goods shelf, and extend toward the warehouse-in conveying line for picking-up;
sending an instruction to the sky transfer unit, making the goods picking-up and placing component of the sky transfer unit retract and move upward to a position corresponding to a target empty storage bin after picking up the goods, extend toward the target empty storage bin, and place the target to-be-warehoused-in goods in the target empty storage bin.
